## Europäisches Patentamt

## European Patent Office

## Office européen des brevets

(11) Numéro de publication: **0 000 974**
**B1**

(12) **FASCICULE DE BREVET EUROPEEN**

(45) Date de publication du fascicule de brevet: **02.09.81**

(51) Int. Cl.³: **F 16 C 13/04, B 02 C 17/24**

(21) Numéro de dépôt: **78200160.6**

(22) Date de dépôt: **28.08.78**

(54) Rouleau-moteur pour le support et l'entraînement de la virole cylindrique d'un engin rotatif à axe horizontal ou faiblement incliné.

(30) Priorité: **31.08.77 BE 1008356**
**14.12.77 FR 7737597**

(43) Date de publication de la demande:
**07.03.79 Bulletin 79/5**

(45) Mention de la délivrance du brevet:
**02.09.81 Bulletin 81/35**

(84) Etats Contractants Désignés:
**BE CH DE FR GB LU NL SE**

(56) Documents cités:
**DE - A - 2 649 648**
**FR - A - 2 292 521**

(73) Titulaire: **ATELIERS DE CONSTRUCTIONS ELECTRIQUES DE CHARLEROI (ACEC) Société Anonyme**
**54, Chaussée de Charleroi**
**B-1060 Bruxelles (BE)**

(72) Inventeur: **Coppin, Roland**
**Avenue Roi Bauduin**
**B-6419 Marbaix-la-Tour (BE)**
Inventeur: **Ghislain, André**
**Rue de Thy-le-Bauduin**
**B-6422 Laneffe (BE)**

(74) Mandataire: **Meunier, Marcel et al,**
**ACEC - Service des Brevets Boîte Postale 4**
**B-6000 Charleroi (BE)**

Courier Press, Leamington Spa, England.

Rouleau-moteur pour le support et l'entraînement de la virole cylindrique d'un engin rotatif à axe horizontal ou faiblement incliné.

La présente invention a trait à des perfectionnements apportés aux engins cylindriques à axe de rotation horizontal ou faiblement incliné, tels que, par exemple, à titre non limitatif, les broyeurs à ciment ou clinker, les broyeurs à boulets, les mélangeurs et les bouleteurs, ainsi que les cylindres à diffusion continue, etc.; elle concerne particulièrement de tels engins qui comprennent une virole cylindrique reposant sur des lignes de rouleaux-moteurs, dont l'axe est parallèle à l'axe longitudinal de la virole, et qui servent à la fois de support et de moyen d'entraînement de la virole.

Une disposition générale d'un engin du type défini ci-desus est décrite par exemple dans le brevet français 1567267.

Le document FR—A—2 292 521 décrit par ailleurs un rouleau-moteur pour l'application susvisée constitué d'un moteur électrique à deux bouts d'arbre attaquant à chaque bout au moins une roue faisant office de rouleau pour le support et l'entraînement de la virole de l'engin.

D'autre part, le document DE—A—2 649 648 décrit un rouleau-moteur comprenant une fusée cylindrique montée en porte-à-faux sur un châssis entourée d'une jante rotative et renfermant un moteur, la jante rotative étant entraînée par un flasque relié au moteur et appuyant sur la fusée à l'aide d'un roulement.

La présente invention concerne plus particulièrement une nouvelle conception des rouleaux-moteurs, qui permet, outre une exécution aisée, un montage ou un démontage facile et rapide.

Selon la présente invention, le rouleau-moteur pour le support et l'entraînement de la virole cylindrique d'un engin rotatif à axe horizontal ou faiblement incliné reposant sur des lignes de rouleaux-moteurs dont l'axe est parallèle à l'axe longitudinal de la virole, est caractérisé en ce que la fusée cylindrique fixée au châssis est ouverte du côté du châssis où le moteur est fixé sur la fusée à l'aide d'un flasque et est ouverte côté porte-à-faux où un réducteur est fixé sur la fusée, en ce que la jante est supportée par l'intermédiaire d'un double jeu de roulements par la fusée et en ce que le flasque entraînant la jante est relié au bout d'arbre du réducteur.

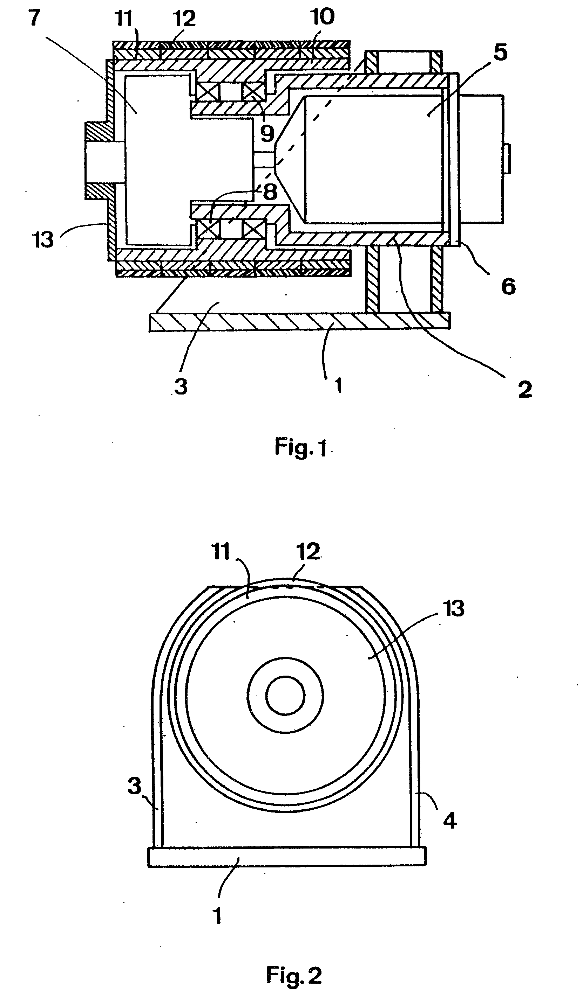

L'invention sera explicitée dans la description qui va suivre en référence aux dessins annexés qui représentent un exemple de réalisation d'un rouleau-moteur pour le support et l'entraînement d'une virole cylindrique mettant en oeuvre les caractéristiques de la présente invention. Ces dessins représentent respectivement en figure 1, une vue longitudinale en coupe et en figure 2, une vue en bout, d'un rouleau-moteur.

En référence aux dessins, 1 désigne un châssis du rouleau-moteur qui supporte en porte-à-faux une fusée cylindrique 2 ouverte de part et d'autre. Le châssis 1 comprend deux flasques latéraux 3 et 4 qui forment une carcase extérieure partielle pour le rouleau moteur. A l'intérieur de la fusée 2, côté châssis, se trouve un moteur électrique 5 fixé latéralement à cette fusée 2 par un flasque 6.

Un réducteur planétaire 7 est également fixé sur la fusée 2, côté porte-à-faux, de façon à embrayer avec le bout d'arbre du moteur electrique 5.

La fusée 2 est munie d'un chemin de roulement extérieur formé d'un double jeu de roulements 8 et 9; ces roulements supportent une jante métallique 10 dont un portion entoure la fusée 2. Sur la jante métallique 10 sont fixées des frettes métalliques 11, qui sont recouvertes à leur surface extérieure d'un revêtement élastique 12, destiné à entrer en contact avec la surface de la virole cylindrique devant être supportée et entraînée par le rouleau-moteur.

Un flasque circulaire 13 calé sur le bout d'arbre du réducteur planétaire 7 est solidaire à sa périphérie de la jante métallique 10 et entraîne celle-ci.

On voit facilement que le rouleau-moteur suivant la présente invention est d'un montage et d'un démontage particulièrement faciles et que l'on peut remplacer aisément et rapidement, sans enlever la charge constituée par une virole, non représentée, sur la jante 10, soit d'un côté le moteur d'entraînement, soit de l'autre côté le réducteur planétaire. Il présente en outre l'avantage d'être réalisé suivant un ensemble très compact.

**Revendication**

Rouleau-moteur pour le support et l'entraînement de la virole cylindrique d'un engin rotatif à axe horizontal ou faiblement incliné reposant sur des lignes de rouleaux-moteurs dont l'axe est parallèle à l'axe longitudinal de la virole comprenant une fusée cylindrique (2) montée en porte-à-faux sur un châssis (1) entournée d'une jante rotative (10) et renfermant un moteur (5), la jante rotative étant entraînée par un flasque (13) relié au moteur (5) et appuyant sur la fusée à l'aide d'un roulement, caractérisé en ce que la fusée cylindrique (2) fixée au châssis (1) est ouverte côté châssis où le moteur (5) est fixé sur la fusée (2) à l'aide d'un flasque (6) et est ouverte côté porte-à-faux où un réducteur (7) est fixé sur la fusée (2), en ce que la jante (10) est supportée par l'intermédiaire d'un double jeu de roulements par la fusée (2) et en ce que le flasque (13) entraîant la jante (10) est relié au bout d'arbre du réducteur (7).

## Claim

Drive roller for supporting and driving the cylindrical sleeve of a rotary appliance with a horizontal or slightly inclined axis, said cylindrical sleeve resting on lines of drive rollers, the axis of which is parallel to the longitudinal axis of the sleeve, comprising a cylindrical spindle (2) which is mounted in a cantilever manner on a frame (1) and is surrounded by a rotary rim (10) and which encloses a motor (5), the rotary rim being driven by a flange (13) which is connected to the motor (5) and being supported on the spindle by means of a bearing, characterised in that the cylindrical spindle (2) fixed to the frame (1) is open on the frame side where the motor (5) is fixed to the spindle (2) by means of a flange (6) and is open on the cantilever side where a reduction unit (7) is fixed to the spindle (2), in that the rim (10) is supported by the spindle (2) by means of a double set of bearings and in that the flange (13) driving the rim (10) is connected to the shaft end of the reduction unit (7).

## Patentansprüch

Motorisch angetriebene Rolle zur Lagerung und zum Antrieb einer horizontal oder, schwach geneigt angeordneten zylindrischen Drehtrommel einer rotierenden Maschine, wobei die Drehtrommel auf Linien von Rollen aufliegt, deren Achse parallel zur Längsachse der Drehtrommel verläuft, mit einem zylindrischen, freitragend an einem Chassis (1) befestigten Spindelkörper (2), der einen Motor (5) umschliesst und von einer drehbaren Felge (10) umgeben ist, die von einem mit dem Motor (5) verbundenen Flansch (13) angetrieben wird und sich über ein Wälzlager auf dem Spindelkörper abstützt, dadurch gekennzeichnet, dass der am chassis (1) befestigte Spindelkörper (2) zum Chassis hin offen ist, wo der Motor (5) am Spindelkörper (2) mittels eines Flanschs (6) befestigt ist, und zur freitragenden Seite hin offen ist, wo am Spindelkörper (2) ein Untersetzungsgetriebe (7) angebracht ist, dass die Felge (10) vom Spindelkörper (2) mittels einer doppelten Wälzlagergruppe getragen wird und dass der die Felge (10) antreibende Flansch (13) mit dem Ende der Welle des Untrersetzungsgetriebes (7) verbunden ist.

Fig. 1

Fig. 2